# EUROPEAN PATENT SPECIFICATION

(11) **EP 3 401 345 B1**
(45) Date of publication and mention of the grant of the patent: **25.03.2020**
(21) Application number: 16883842.3
(22) Date of filing: 26.12.2016
(51) Int. Cl.: C08G 18/76, C08G 18/00, C08G 18/42, C08G 18/48, G03G 15/00, G03G 15/08, C08G 101/00, C08G 18/66, C08G 18/40

(54) **COMPOSITION FOR POLYURETHANE FOAM**
ZUSAMMENSETZUNG FÜR POLYURETHANSCHAUM
COMPOSITION POUR MOUSSE DE POLYURÉTHANE

(30) Priority: 08.01.2016 JP 2016002590
(43) Date of publication of application: 14.11.2018
(73) Proprietor: Bridgestone Corporation, Tokyo 104-8340 (JP)
(72) Inventor: HIRATA, Aya, Tokyo 104-8340 (JP); Kanzaki, Shinya, Tokyo 104-8340 (JP)
(74) Representative: Oxley, Robin John George
(86) International application number: PCT/JP2016/088725
(87) International publication number: WO 2017/119343

(56) References cited:
- JP-A- H0 833 095
- JP-A- H09 296 160
- JP-A- 2003 048 944
- JP-A- 2011 121 998
- JP-A- 2013 029 592
- JP-B1- S4 630 309

## Description

### Technical Field

The present invention relates to a toner sealing material obtained by foaming a composition for polyurethane foam to form a polyurethane foam.

### Background Art

Polyurethane foam has soft mechanical characteristics and excellent processability, and thus is used as various sealing materials, for example, toner sealing materials and water barrier sealing materials.

With recent progress in electrophotography, members including polyurethane foam have attract attentions in image forming devices such as a dry electrophotographic device as members applied to various uses such as charging, development, transfer, toner supply, and cleaning. Such members including polyurethane foam have been used as image forming device members having elasticity, such as a charging roller, a development roller, a transfer roller, a toner supply roller, and a cleaning roller.

In image forming devices such as various types of printers, a uniformly charged image carrier is selectively exposed to light to form a latent image, the latent image is developed with toner, and the formed toner image is transferred to a recording medium, whereby an image is recorded. In such a device, toner must be supplied at suitable times. The toner supply is performed by using a toner cartridge including an image carrier, a charging unit, a developing unit, a cleaning unit, and the like integrated therein. Users can perform supply of toner, exchange of an image carrier finishing the service life, or the like by detaching and attaching the cartridge in the device main body, enabling easy maintenance. Although the process cartridge method is adopted in many image forming devices, leak of toner causes a defective image. A toner sealing material is thus mounted, for example, on a contact surface of a resin molded article, for example, between frames of a cartridge body or between a developing sleeve and a developing frame of a developing unit. Also, a toner sealing material is provided in a gap between an end portion of an image carrier and a waste toner reservoir of a cleaning unit, on the image carrier end portion side, so as to prevent waste toner from leaking.

Besides the roller members as described above, there is a toner sealing material, as an interior member of an image forming device including a polyurethane foam excellent in the sealing property, that is attached on the periphery of, for example, a toner container or an image forming unit and thereby exhibits a function of preventing leak and diffusion of toner from, for example, contact surfaces of members. Polyurethane foams for use in toner sealing materials are required to have low air permeability and fine cell structure.

As one example of a technique directed to a member for image forming devices including a polyurethane foam, PTL 1 discloses a toner sealing material obtained by foaming a polyurethane foam raw material containing a polyol, an isocyanate, a catalyst, and a foam stabilizer, in which the polyol is a dimer acid polyol, the proportion of diphenylmethane diisocyanate in the isocyanate is 55 to 75% by mass, the catalyst contains a reactive amine, and the polyurethane foam raw material contains 0.2 to 0.5 parts by mass of the reactive amine and 3 to 5 parts by mass of the foam stabilizer based on 100 parts by mass of the polyol. This realizes a toner sealing material having a good toner sealing performance and not causing defects or faults due to adhesion, transfer, and the like of a silicone foam stabilizer or an amine-based catalyst in formulation of a composition for polyurethane foam.

### Citation List

### Patent Literature

PTL 1: JP-A-2013-29592

### Summary of Invention

### Technical Problem

Although the invention disclosed in PTL 1 has made it possible to lower air permeability and develop an excellent toner sealing property, it is desirable to further increase the tensile strength and restorability while ensuring the sealing property of a toner sealing material of a polyurethane foam.

Accordingly, a problem that the present invention is to solve is to provide a toner sealing material, which is formed of a polyurethane foam produced by foaming a composition for polyurethane foam that can increase tensile strength of a polyurethane foam, and decrease compression residual strain and coefficient of hysteresis loss thereof, thereby achieving an excellent restorability, while ensuring an excellent toner sealing property of the polyurethane foam.

### Solution to Problem

As a result of intensive studies, the present inventors have found that the above problem can be solved by specifying, in a composition for polyurethane foam produced by blending a polyol, tolylene diisocyanate, a foaming agent, a foam stabilizer, and a crosslinking agent, the composition of the polyol, the composition of the tolylene diisocyanate, and the functionality of the crosslinking agent. The present invention has been completed based on the findings.

Specifically, the present invention provides the following inventions of [1] and [2].
[1] A toner sealing material, which is formed of a polyurethane foam produced by foaming a composition for polyurethane foam, wherein the composition for polyurethane foam is produced by blending a polyol containing a polyester polyol and a polyether polyol, tolylene diisocyanate, a foaming agent, and a foam stabilizer, wherein the polyester polyol contains a phthalate ester polyol, and the tolylene diisocyanate has a compositional mass ratio (2,4-tolylene diisocyanate/2,6-tolylene diisocyanate) of (65/35) to (70/30), wherein the composition for polyurethane foam has a mass ratio of the polyester polyol to the polyether polyol (polyester polyol/polyether polyol) of (70/30) to (30/70).
[2] An image forming device including the toner sealing material according to [1].

### Advantageous Effects of Invention

According to the present invention, there is provided a toner sealing material, which is formed of a polyurethane foam produced by foaming a composition for polyurethane foam which has, while ensuring an excellent toner sealing property derived from a polyurethane foam, increased tensile strength, and reduced compression residual strain and coefficient of hysteresis loss, thereby exhibiting excellent restorability.

### Brief Description of the Drawings

Fig. 1 is a schematic view showing a state, in a method for measuring a toner sealing property, where a sample of a polyurethane foam that has a punched hole of 10 mm length and 10 mm width in which a toner is placed, is assembled between two acrylic plates under 50% compression.
Fig. 2 is a schematic view for explaining that a degree of toner erosion is determined by measuring the lengths of parts eroded by the toner at 6 points shown in Fig. 2 with a a vernier caliper in the method for measuring a toner sealing property.

### Description of Embodiments

The present invention will be described in detail below.

In the present invention, "A to B" representing the numerical limitation means a numerical range including the end points A and B.

"Parts by mass" and "% by mass" have the same meanings as "parts by weight" and "% by weight", respectively.

In the present invention, a combination of preferred embodiments is a more preferred embodiment.

### <Composition for Polyurethane Foam>

Hereinafter, the composition for polyurethane foam of the present invention will be explained.

The composition for polyurethane foam of the present invention is a composition produced by blending a polyol containing a polyester polyol and a polyether polyol, tolylene diisocyanate, a foaming agent, and a foam stabilizer, the polyester polyol containing a phthalate ester polyol, the tolylene diisocyanate having a compositional mass ratio (2,4-tolylene diisocyanate/2,6-tolylene diisocyanate) of (65/35) to (70/30).

### [Polyol]

In the present invention, the composition for polyurethane foam contains a polyol, and the polyol contains a polyester polyol and a polyether polyol.

The polyol contained in the composition for polyurethane foam of the present invention has a mass ratio of the polyester polyol to the polyether polyol (polyester polyol/polyether polyol) of (70/30) to (30/70), preferably has a mass ratio of (60/40) to (40/60), and particularly preferably has a mass ratio of (50/50). A mass ratio of the polyester polyol to the polyether polyol in the above range is preferred in terms of providing an urethane foam having both the tensile strength and the restorability. An amount of the polyester polyol not exceeding the mass ratio (70/30) is preferred in terms of providing a polyurethane foam having good restorability, and an amount of the polyester polyol not less than mass ratio (30/70) is preferred in terms of providing a polyurethane foam having high elongation and high strength.

### (Polyester Polyol)

In the present invention, the polyester polyol contains a phthalate ester polyol. By the use of a phthalate ester polyol, the hydrogen bond between ester bonds in the phthalate ester polyol provides increased tensile strength and increased elongation at break of a polyurethane foam. An effect of forming finer cells in the polyurethane foam is also exhibited due to high viscosity. From the viewpoints, the whole of the polyester polyol according to the present invention is preferably phthalate ester polyols.

The phthalate ester polyol according to the present invention is not particularly limited, but the polyester polyol preferably contains as a main component at least one phthalate ester polyol selected from phthalic anhydride (o-phthalic acid), m-phthalic acid (isophthalic acid), p-phthalic acid (terephthalic acid), and derivatives thereof. The "main component", as used herein, means that at least one phthalate ester polyol selected from phthalic anhydride (o-phthalic acid), m-phthalic acid (isophthalic acid), p-phthalic acid (terephthalic acid), and derivatives thereof is contained at 50% by mass or more, preferably contained at 60% by mass or more, more preferably contained at 70% by mass or more, and further preferably contained at 80% by mass or more, in the whole of the polyester polyol.

The phthalate ester polyol according to the present invention preferably has a hydroxyl value of 50.0 to 65.0 mg-KOH/g, and more preferably has a hydroxyl value of 54.0 to 58.0 mg-KOH/g.

The phthalate ester polyols may each be used alone or may be used in combination of two or more thereof.

In the present invention, polyester polyols used besides the phthalate ester polyol include polyester polyols obtained by polycondensation of aliphatic dicarboxylic acids having 3 to 20 carbon atoms, such as malonic acid, succinic acid, adipic acid, suberic acid, sebacic acid, and brassylic acid, aromatic dicarboxylic acids other than phthalic acid, and the like and aliphatic glycols having 1 to 6 carbon atoms, such as ethylene glycol, diethylene glycol, and propylene glycol, and the like.

### (Polyether Polyol)

A suitable polyether polyol in the present invention is, but not limited to, a polyether polyol obtained by ring-opening polymerization of an alkylene oxide from the viewpoint of reactivity. Examples of such alkylene oxides include propylene oxide (PO) and ethylene oxide (EO). The alkylene oxides may each be used alone or may be used in combination of two or more thereof.

As the polyether polyol, homopolymers of PO, homopolymers of EO, and polyether polyols obtained by copolymerization of PO and EO may be used. Copolymerization here may be random copolymerization or block copolymerization.

Examples of polymerization initiators include pentaerythritol, glycerol, ethylene diamine, Mannich, tolylene diamine, and sucrose. Also, the polymerization initiators may each be used alone or may be used in combination of two or more thereof.

### [Tolylene diisocyanate]

The present invention uses tolylene diisocyanate as an isocyanate compound, and preferably uses only tolylene diisocyanate as an isocyanate compound.

The tolylene diisocyanate is required to have a compositional mass ratio (2,4-tolylene diisocyanate/2,6-tolylene diisocyanate) of (65/35) to (70/30). With a compositional mass ratio in this range, the polyurethane foam has high elongation and high strength, as well as increased restorability. Furthermore, an amount of 2,6-tolylene diisocyanate not smaller than the compositional mass ratio (70/30) of tolylene diisocyanate is preferred in terms of maintaining stable foamability, and an amount of 2,6-tolylene diisocyanate not larger than (65/35) is preferred in terms of forming finer cells in the resulting polyurethane foam to ensure good sealing performance.

When the (2,4-tolylene diisocyanate/2,6-tolylene diisocyanate) is (less than 65/more than 35), the balance between the foaming rate and the resin formation rate is lost due to the influence of the molecular structure of 2,6-tolylene diisocyanate, resulting in a number of cells in the urethane foam less than 50/25 mm. This is not preferred since a sufficient sealing property is then not obtained. When the (2,4-tolylene diisocyanate/2,6-tolylene diisocyanate) is (more than 70/less than 30), 2,6-tolylene diisocyanate is deficient and the balance between the foaming rate and the resin formation rate is lost. This is not preferred since foaming and molding of a polyurethane foam is then difficult.

In the present invention, an isocyanate index of the tolylene diisocyanate may be 100 or less or may be more than 100, but is preferably 90 to 110. When the isocyanate index is in this range, the resulting foam has an appropriate hardness and is excellent in mechanical properties, such as compression residual strain. The isocyanate index, as used herein, refers to an equivalent ratio in percent of isocyanate groups of the polyisocyanate to active hydrogen groups of the polyol, water as a foaming agent, and the like. Accordingly, an isocyanate index more than 100 means that the polyisocyanate is excessive relative to the polyol and the like.

### [Foaming agent]

The composition for polyurethane foam of the present invention contains a foaming agent. The foaming agent is for foaming a polyurethane resin into a polyurethane foam. In the present invention, the foaming agent preferably contains water, and the foaming agent more preferably consists only of water. The amount of water blended is 2.5 to 5.0 parts by mass based on 100 parts by mass of the polyol. When the amount of water falls within the above range, foaming by a foaming reaction appropriately occurs to produce a toner sealing material having a low density.

### [Foam Stabilizer]

The composition for production of polyurethane foam of the present invention contains a foam stabilizer. The foam stabilizer is used as needed for smoothly promoting foaming by a foaming agent. As the foam stabilizer, those commonly used in production of a flexible polyurethane foam can be used. Specific examples of foam stabilizers include silicone compounds, anionic surfactants, such as sodium dodecylbenzenesulfonate and sodium lauryl sulfate, polyether siloxanes, and phenol compounds. Silicone compounds are suitably used as a silicone-based foam stabilizer because of high foam-stabilizing ability and capability of forming fine cells in a polyurethane foam and lowering air permeability.

The amount of the foam stabilizer blended is preferably 1.0 to 5.0 parts by mass based on 100 parts by mass of the polyol, more preferably 1.0 to 4.5 parts by mass, and further preferably 3.5 to 4.5 parts by mass. When the amount of the foam stabilizer is 1.0 parts by mass or more, the foam stabilizing effect in foaming of a foam raw material is sufficiently exhibited and a urethane foam having fine cells and low air permeability, thus having a good toner sealing property can be obtained. On the other hand, when the amount is 5.0 parts by mass or less, the form stabilizing effect can be appropriately exhibited to thereby produce a polyurethane foam having ensured foamability and desired open cells.

In the present invention, a reactive silicone foam stabilizer is preferably blended in the composition for polyurethane foam. With a reactive silicone foam stabilizer blended, a silicone is reacted with an isocyanate or a polyol and is thereby incorporated in bonds, making vaporization difficult. As used herein, the reactive silicone foam stabilizer (sometimes abbreviated to "reactive silicone") means a silicone compound (polysiloxane compound) having at least one reactive group selected from the group consisting of an amino group, an epoxy group, a hydroxy group, a mercapto group, and a carboxy group at an end of the main chain or in a side chain.

The reactive silicone foam stabilizer is preferably selected from compounds in which a reactive group selected from the group consisting of an amino group, an epoxy group, a hydroxy group, a mercapto group, and a carboxy, or a group having the reactive group, is introduced in a side chain or an end of the main chain of a silicone compound such as dimethyl silicone, a methylphenyl silicone, or methyl hydrogen silicone. Among them, a reactive silicone having a hydroxy group or a carboxy group as a reactive group is preferred, and a reactive silicone having a carboxy group is more preferred.

As the reactive silicone foam stabilizer, commercially available products may be used, and examples thereof include various reactive silicones manufactured by Shin-Etsu Silicone Co., Ltd., Dow Corning Toray Co., Ltd., Momentive Performance Materials, Inc., and other manufacturers. Specific examples of reactive silicones having carboxy groups include CF1218 (from Dow Corning Toray Co., Ltd.) and X22-3701 (from Shin-Etsu Silicone Co., Ltd.). Specific examples of reactive silicones having hydroxy groups include SF 8427, BY 16-201, and SF 8428 (all from Dow Corning Toray Co., Ltd.), and X-22-4039 and X-22-4015 (both from Shin-Etsu Silicone Co., Ltd.).

In the present invention, the composition for polyurethane foam may contain a nonreactive silicone in addition to the reactive silicone, and may use only a nonreactive silicone without the reactive silicone. The nonreactive silicone is not particularly limited as long as it contains no reactive group, and may be a modified nonreactive silicone, such as a polyether-modified, an aralkyl-modified, or a long chain alkyl-modified silicone. As a nonreactive silicone, commercially available products may be used, and may be appropriated selected from various products sold by Shin-Etsu Silicone Co., Ltd., Dow Corning Toray Co., Ltd., Momentive Performance Materials, Inc., and other manufacturers.

When the reactive silicone has a weight average molecular weight of 14,000 or more, sufficiently low air permeability can be obtained.

### [Crosslinking Agent]

A crosslinking agent may be blended, as desired, in the composition for polyurethane foam in the present invention. The crosslinking agent is preferably a bi- or higher functional crosslinking agent, more preferably a bi- to hexafunctional crosslinking agent, further preferably a bi- to pentafunctional crosslinking agent, furthermore preferably a bi- to tetrafunctional crosslinking agent, and particularly preferably a trifunctional crosslinking agent. Examples of trifunctional crosslinking agents include trifunctional crosslinking agents having a trimethylol propane backbone. The use of a trifunctional crosslinking agent with a trimethylol propane backbone leads to reduced air permeability and an increased toner sealing property.

Examples of functional groups of the tri- or higher functional crosslinking agent with a trimethylol propane backbone include a hydroxy group, an amino group, a cyano group, an epoxy group, a carboxy group, and a formyl group, and among them, a hydroxy group is preferred.

An example of trifunctional crosslinking agents is "DM82162" (Okahata Sangyo Co., Ltd.), and examples of trifunctional crosslinking agents with a trimethylol propane backbone include "ACTCOL (registered trademark) T880" (from Mitsui Chemicals Inc.), trimethylol propane EO-modified triacrylate "TMP" series (Miramer M3130, Miramer M3160, Miramer M3190) (from Toyo Chemicals Co., Ltd.), and trimethylol propane PO-modified triacrylate (Miramer M360) (from Toyo Chemicals Co., Ltd.).

In the composition for polyurethane foam of the present invention, the amount of the bi- or higher functional crosslinking agent, in particular, the trifunctional crosslinking agent blended is preferably 0.1 to 3.0 parts by mass based on 100 parts by mass of the polyol from the viewpoint of improved restorability. When the bi- or higher functional crosslinking agent, in particular, the trifunctional crosslinking agent is blended in an amount in the range of 0.1 to 3.0 parts by mass based on 100 parts by mass of the polyol, the crosslinking density of the polyurethane foam is increased and a toner sealing property is increased. In addition, the use of such a trifunctional crosslinking agent leads to an increased reaction rate of the composition for polyurethane foam, resulting in fine cells and reduced air permeability of the polyurethane foam.

### [Catalyst]

The composition for production of polyurethane foam of the present invention may contain a catalyst as desired. The catalyst is for promoting the reaction of the polyol and tolylene diisocyanate into an urethane and the foaming reaction of tolylene diisocyanate with water as a foaming agent, and may be appropriately selected from conventionally known compounds. As the catalyst according to the present invention, one or more compounds are selected from amine-based catalysts and organic metal catalysts.

In the present invention, an amine-based catalyst can be blended as a catalyst in the composition for polyurethane foam. The amine-based catalysts may each be used alone or may be used in combination of two or more thereof.

The amine-based catalysts are roughly classified into reactive amine catalysts having a functional group reactive with an isocyanate group and nonreactive amine catalysts not having such a reactive functional group.

As the reactive amine catalyst, amine compounds having at least one hydroxy group are preferred, and examples thereof include N,N-dimethylaminoethoxyethanol, N,N-dimethylaminohexanol, N,N-dimethylaminoethoxyethanol, monoethanolamine, diethanolamine, triethanolamine, dimethylaminoethanol, N,N,N'-trimethylaminoethylethanolamine, N-methyl-N'-(2-hydroxyethyl)-piperazine, and N-(2-hydroxyethyl)morpholine.

In addition, examples of nonreactive amine catalysts include triethylamine, tripropylamine, tributylamine, hexadecyldimethylamine, N-methylmorpholine, N-ethylmorpholine, N-octadecylmorpholine, diethyltriamine, N,N,N',N'-tetramethylhexane diamine, N,N,N',N'-tetramethylpropane diamine, N,N,N',N",N"-pentamethyldiethylene triamine, N,N',N'-trimethylaminoethylpiperazine, N,N-dimethylcyclohexylamine, N,N,N',N'-tetramethylethylene diamine, and triethylene diamine.

In the present invention, the amount of the amine-based catalyst blended is preferably 0.1 to 0.4 parts by mass based on 100 parts by mass of the polyol. When the amount of the amine-based catalyst is in the above range, the reaction into urethane and the foaming reaction can be promoted in a sufficient and well-balanced manner.

In the case where an amine-based catalyst is blended, the composition for polyurethane foam of the present invention preferably contains a reactive amine catalyst. A reactive amine reacts with isocyanates. Accordingly, when a reactive amine is used as a catalyst, the vaporization, bleeding-out, scattering, and the like of the amine catalyst is unlikely to occur even under, for example, a wet heat condition, and thereby the occurrence of defects due to adhesion of such a catalyst component can be prevented, leading to increased printing performance.

In the present invention, an organic metal catalyst may be blended as a catalyst in the composition for polyurethane foam. As the organic metal catalyst, carboxylic acid metal salts and the like can be used, and examples of the metal salts include tin salts and bismuth salts. More specific examples of organic metal catalysts include stannous octoate, bismuth octoate, stannous oleate, dibutyl tin diacetate, dibutyl tin dilaurate, dibutyl tin thiocarboxylate, dibutyl tin dimaleate, and dioctyl tin thiocarboxylate.

The amount of the organic metal catalyst blended is preferably 0.1 to 0.4 parts by mass based on 100 parts by mass of the polyol. An amount of the organic metal catalyst in the above range is preferred in terms of producing a urethane foam having appropriate mechanical strength without providing a closed-cell foam or without an insufficient conversion into a resin.

### [Other Raw Materials]

In the composition for polyurethane foam, a flame retardant, a filler, an stabilizer, a colorant, a plasticizer, and the like may be blended according to common methods, as needed.

### <Production of Polyurethane Foam>

A polyurethane foam is produced by reacting and foaming components (raw materials) of the composition for polyurethane foam of the present invention according to common methods.

Reaction of raw materials of a polyurethane foam is complicated and mainly includes an addition polymerization reaction of a polyol and a polyisocyanate into a urethane, a crosslinking reaction of the reaction product and the like and the polyisocyanate, and a foaming reaction of the polyisocyanate and water as a foaming agent.

In production of a polyurethane foam, a one-shot method in which a polyol, a polyisocyanate, and the other components are directly reacted is preferred, and a slab-foaming method in which reaction and foaming are performed under normal temperature and atmospheric pressure is preferred.

In a slab-foaming method of the present invention, for example, a composition for polyurethane foam prepared by mixing and stirring through a one-shot method is ejected onto a belt conveyer, and while moving the belt conveyer, the composition for polyurethane foam naturally foams and cures under normal temperature and atmospheric pressure.

### (Polyurethane Foam)

A polyurethane foam produced by using the composition for polyurethane foam of the present invention preferably has a tensile strength of 55 kPa or more as measured according to JIS K 6400-5: 2012, and more preferably 70 kPa or more.

The elongation at break is preferably 80% or more as measured according to JIS K 6400-5: 2012, and more preferably 100% or more.

The compression residual strain is preferably 8.6% or less as measured according to JIS K 6400-4: 2004, more preferably 6.0% or less, and further preferably 5.0% or less. A compression residual strain of 5.0% or less leads to increased restorability of the polyurethane foam and thus is preferred.

The coefficient of hysteresis loss is preferably 70% or less as measured according to JIS K 6400-2: 2012, more preferably 65% or less, and further preferably 60% or less. A coefficient of hysteresis loss of 60% or less leads to increased restorability of the polyurethane foam and thus is preferred.

The polyurethane foam in the present invention preferably has an apparent density of 20 to 50 kg/m³ as measured according to JIS K 6400-1: 2004. When the apparent density is 20 kg/m³ or more, the polyurethane foam is excellent in mechanical strength. On the other hand, an apparent density of 50 kg/m³ or less leads to light weight.

The apparent density of the polyurethane foam is more preferably 20 to 40 kg/m³.

The air permeability is preferably 3.0 cm³/cm²/sec or less as measured at a foam thickness of 10 mm according to JIS L 1096: 2010 8.26.1 A method (Frazier method). An air permeability of 3.0 cm³/cm²/sec or less leads to an increased toner sealing property. The air permeability is more preferably 1.5 cm³/cm²/sec or less.

The number of cells is preferably 40/25 mm or more as measured according to JIS K 6400-1: 2004 annex 1, more preferably 45/25 mm or more, and further preferably 50/25 mm or more. When the air permeability is 3.0 cm³/cm²/sec or less and the cell number is 50/25 mm or more, the toner sealing property is increased.

### <Toner Sealing Material>

The toner sealing material of the present invention is produced by foaming the composition for polyurethane foam to form a polyurethane foam. The toner sealing material is suitably used in image forming devices and the like.

A toner sealing material produced by using the composition for polyurethane foam of the present invention maintains low compression residual strain for a long period of time and sufficiently prevents toner from leaking. In addition, while having softness with a low hardness, the toner sealing material has a good sealing property, and leak of toner can be sufficiently prevented only by providing the toner sealing material on a contact surface, for example, between cartridge body frames and appropriately compressing it. Thus, it is possible to achieve a simple structure of members such as a toner cartridge body frame, and also possible to reduce the required resin amount. Accordingly, the toner sealing material is advantageous also from the viewpoint of cost reduction.

The toner sealing material of the present invention is used, for example, by being provided, for example, between frames of a toner cartridge body so that toner filled in the toner cartridge body incorporated into an image forming device, printer, are prevented from leaking out of the cartridge body. Printing with the printer is performed by allowing the toner to adhere onto a photosensitive drum via a developing cylinder, and transferring the toner adhered on the photosensitive drum onto a paper by a transfer roller. In this case, the toner sometimes leaks from a point, for example, between toner cartridge body frames particularly after a long-term use. When the toner sealing material of the present invention is provided, for example, between the frames, however, the toner leakage is sufficiently prevented.

### Examples

Next, the present invention will be described in more detail with reference to Examples, but the present invention is by no means limited to the Examples. Unless otherwise specified, parts and % in Examples and Comparative Examples described below mean parts by mass and % by mass, respectively.

In the Examples and Comparative Examples, the apparent density, elongation at break, tensile strength, compression residual strain, coefficient of hysteresis loss, air permeability, number of cells, toner sealing property, number average molecular weight, and hydroxyl value were determined according to the following methods.

### 1. Apparent density

It was measured according to JIS K 6400-1: 2004.

### 2. Elongation at break

It was measured according to JIS K 6400-5: 2012.

### 3. Tensile strength

It was measured according to JIS K 6400-5: 2012.

### 4. Compression residual strain

It was measured according to JIS K 6400-4: 2004.

### 5. Coefficient of hysteresis loss

It was measured according to JIS K 6400-2: 2012.

### 6. Air permeability

It was measured at a foam thickness of 10 mm according to JIS L 1096: 2010, 8.26.1 A method (Frazier method).

### 7. Number of cells

Measurement according to JIS K 6400-1: 2004 annex 1 was performed to count a number of cells through observation with a stereomicroscope.

### 8. Toner sealing property

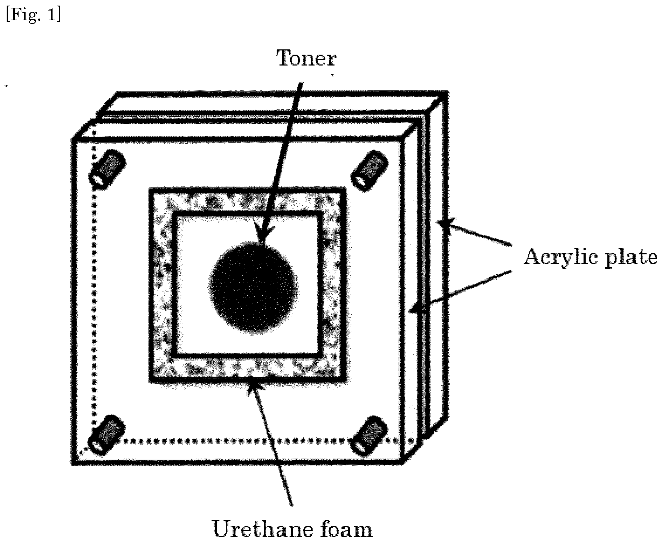

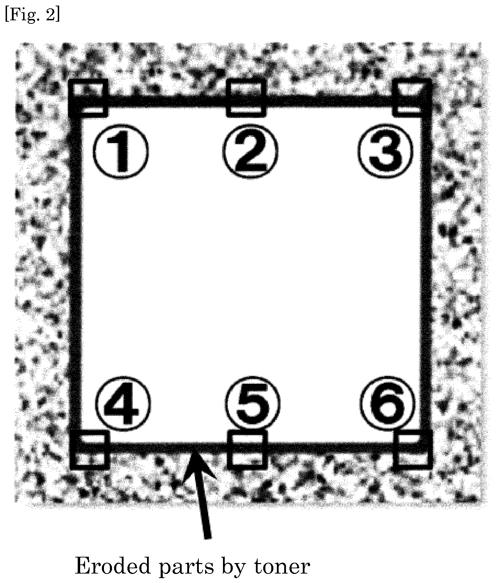

As shown in Fig. 1, a hole of 10 mm length and 10 mm width was punched in a sample, a toner was placed in the hole, and the sample was assembled between two acrylic plates under 50% compression. After storage for 30 minutes, the assembly was vertically shaken 20 times at room temperature. The degrees of erosion by the toner were measured at 6 points shown in Fig. 2 with a vernier caliper. An erosion by the toner of 2.0 mm or less in average was judged as pass, and an erosion by the toner exceeding 2.0 mm in average was judged as fail.

### 9. Number average molecular weight

It was determined in terms of standard polyethylene by GPC.

### 10. Hydroxyl value

It was measured according to JIS K 1557-1: 2007.

Components used in the Examples and Comparative Examples are as follows.
* Polyol A: phthalate ester polyol, from Mitsui Chemicals Inc.: tradename "ACTCOL (registered trademark) 3P-56D" (hydroxyl value: 54.0-58.0 mg-KOH/g, viscosity (25°C): 10,000-20,000 mPa·s)
* Polyol B: polyether polyol, from Sanyo Chemical Industries, Ltd.: tradename "SANNIX (registered trademark) GP-3000V" (number average molecular weight: 3,000)
* Polyol C: polyether polyol, from Sanyo Chemical Industries, Ltd.: tradename "SANNIX (registered trademark) GP-4000V"
* Polyol D: dimer acid polyester polyol, from Hitachi Chemical Co., Ltd.: tradename "Teslac 2458" (number average molecular weight: 2,500, hydroxyl value: 70 to 75 mg-KOH/g)
* Isocyanate A: tolylene diisocyanate, from Mitsui Chemicals Inc.: tradename "COSMONATE (registered trademark) T-80" [compositional mass ratio (2,4-tolylene diisocyanate/2,6-tolylene diisocyanate): (80/20)]
* Isocyanate B: tolylene diisocyanate, from Mitsui Chemicals Inc.: tradename "COSMONATE (registered trademark) T-65" [compositional mass ratio (2,4-tolylene diisocyanate/2,6-tolylene diisocyanate): (65/35)]
* Isocyanate C: methylene bis(4,1-phenylene)=diisocyanate, from Sumika Bayer Urethane Co., Ltd., tradename "44V-20B"
* Reactive amine catalyst: from Air Products Japan, Inc., tradename "DABCO (registered trademark) NE300"
* Foaming agent: water
* Crosslinking agent A: trifunctional crosslinking agent, from Okahata Sangyo Co., Ltd., tradename "DM82162"
* Crosslinking agent B: trifunctional crosslinking agent, from Mitsui Chemicals Inc., tradename "ACTCOL (registered trademark) T880" (number average molecular weight: 224, hydroxyl value: 880 mg-KOH/g)
* Crosslinking agent C: trifunctional crosslinking agent, from Toyo Chemical Co., Ltd., tradename "trimethylol propane"
* Crosslinking agent D: bifunctional crosslinking agent, from Mitsui Chemicals Inc. "diethylene glycol, DEG"
* Foam stabilizer A: reactive silicone foam stabilizer, carboxy-modified organosilicone, from Dow Corning Toray Co., Ltd., tradename "CF1218" (weight average molecular weight: 14,400)
* Foam stabilizer B: silicone foam stabilizer, from Momentive Performance Materials Japan LLC, tradename "NIAX SILICONE (registered trademark) L-5340" (weight average molecular weight: 13,000)

### Examples 1 to 20 and Comparative Example 1

Polyurethane foam raw materials shown in Table 1 were mixed and foamed by a one-shot method and a slab-foaming method under atmospheric pressure at 20°C to produce 21 polyurethane foams. The obtained polyurethane foams were subjected to the evaluations as described above. The results are shown in Table 1. The numerical values in the rows of formulation of composition in Table 1 are in parts by mass except for the mass ratio.

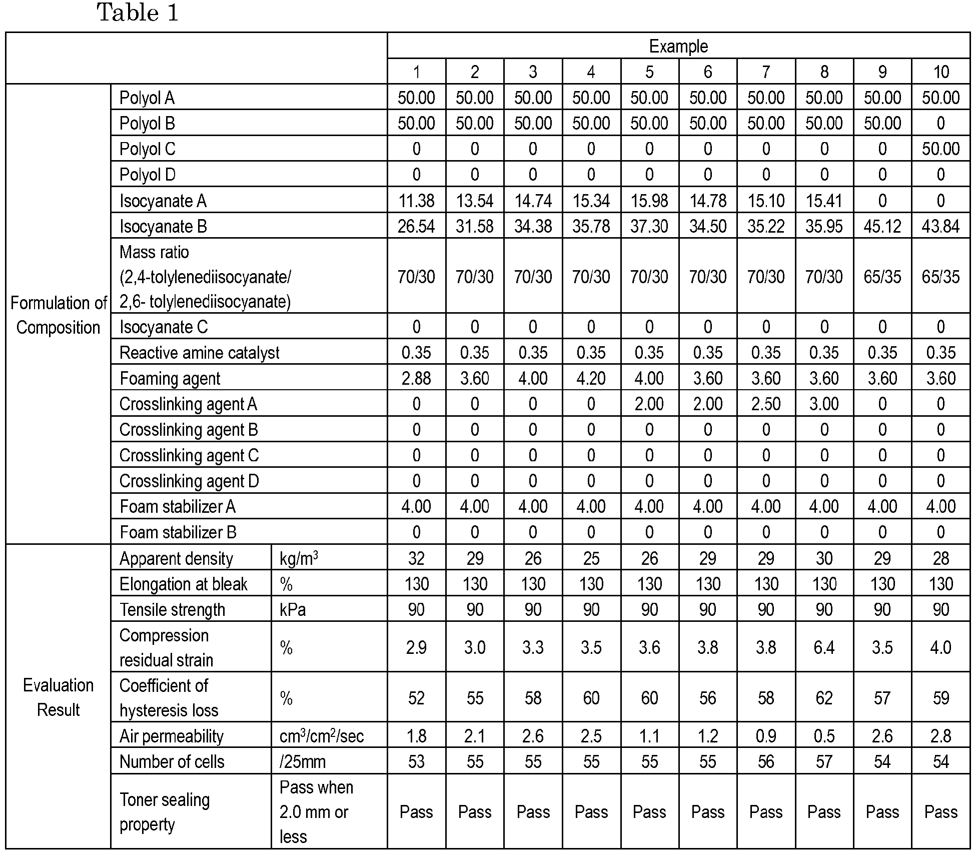

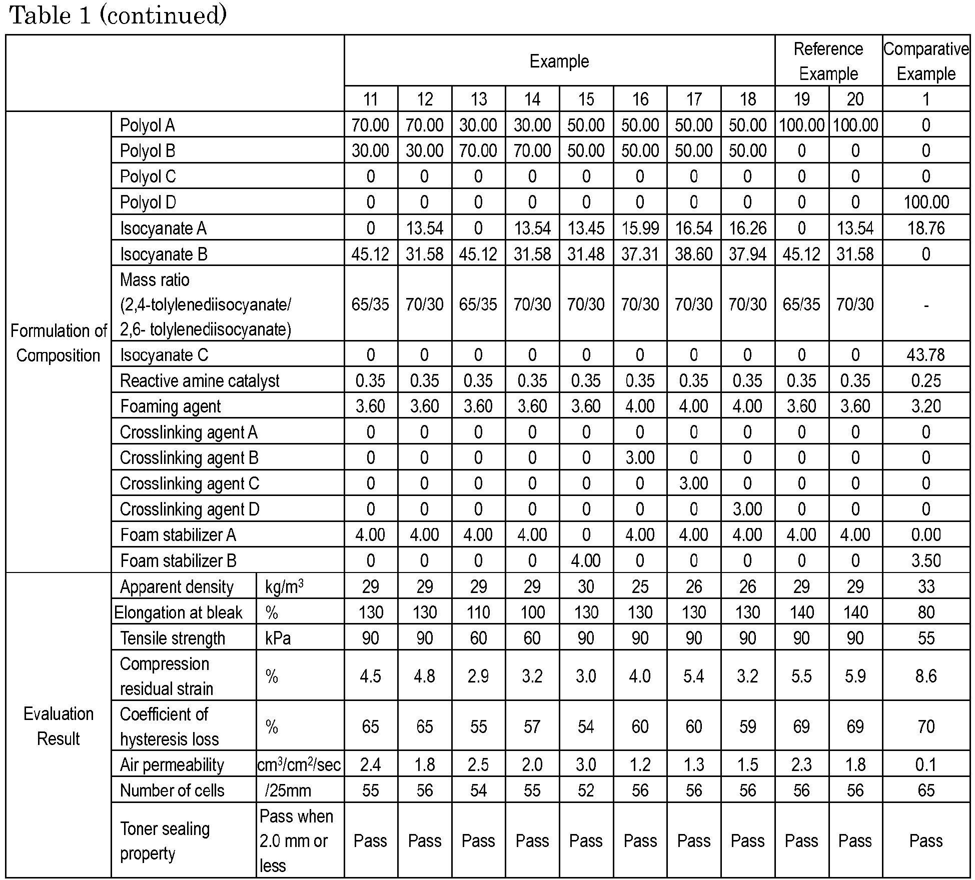

As is clear from Table 1, the toner sealing materials produced from polyurethane foams of Examples 1 to 18, and Reference Examples 19 and 20 were able to show increased tensile strength of the polyurethane foam, reduced compression residual strain and coefficient of hysteresis loss thereof, while ensuring an excellent toner sealing property of the polyurethane foam, as compared with the toner sealing material produced from the polyurethane foam of Comparative Example 1. Thus, the toner sealing materials of Examples 1 to 18 and Reference Examples 19 and 20 was able to exhibit excellent restorability.

### Industrial Applicability

Polyurethane foams obtained from the composition for polyurethane foam of the present invention are largely improved in tensile strength, compression residual strain, and coefficient of hysteresis loss and are superior in restorability, while ensuring an excellent toner sealing property, and thus are suitably used as toner sealing materials of various image forming devices such as a dry electrophotographic device.

## Claims

1. A toner sealing material, which is formed of a polyurethane foam produced by foaming a composition for polyurethane foam,
wherein the composition for polyurethane foam is produced by blending a polyol comprising a polyester polyol and a polyether polyol, tolylene diisocyanate, a foaming agent, and a foam stabilizer,
wherein the polyester polyol comprises a phthalate ester polyol, and the tolylene diisocyanate has a compositional mass ratio (2,4-tolylene diisocyanate/2,6-tolylene diisocyanate) of (65/35) to (70/30),
wherein the composition for polyurethane foam has a mass ratio of the polyester polyol to the polyether polyol (polyester polyol/polyether polyol) of (70/30) to (30/70).

2. The toner sealing material according to claim 1, wherein the foam stabilizer comprises a reactive silicone foam stabilizer.

3. The toner sealing material according to claim 1 or 2, wherein the composition for polyurethane foam is produced by further blending a bi- or higher functional crosslinking agent.

4. The toner sealing material according to claim 3, wherein an amount of the bi- or higher functional crosslinking agent blended is from 0.1 to 3.0 parts by mass based on 100 parts by mass of the polyol.

5. The toner sealing material according to claim 3 or 4, wherein the bi- or higher functional crosslinking agent is a trifunctional crosslinking agent.

6. An image forming device comprising the toner sealing material of claim 1.

## Patentansprüche

1. Tonerdichtungsmaterial, das aus einem Polyurethanschaumstoff gebildet wird, der durch Schäumen einer Zusammensetzung für Polyurethanschaumstoff hergestellt wird,
wobei die Zusammensetzung für Polyurethanschaumstoff durch Mischen eines Polyols hergestellt wird, das ein Polyesterpolyol und ein Polyetherpolyol, Tolylendiisiocyanat, ein Schäumungsmittel und einen Schaumstabilisator umfasst,
wobei das Polyesterpolyol ein Phthalatesterpolyol umfasst und das Tolylendiisocyanat ein kompositionelles Masseverhältnis (2,4-Tolylendiisocyanat/2,6-Tolylendiisocyanat) von (65/35) bis (70/30) aufweist,
wobei die Zusammensetzung für Polyurethanschaumstoff ein Masseverhältnis des Polyesterpolyols zu dem Polyetherpolyol (Polyesterpolyol/Polyetherpolyol) von (70/30) bis (30/70) aufweist.

2. Tonerdichtungsmaterial nach Anspruch 1, wobei der Schaumstabilisator einen reaktiven Siliconschaumstabilisator umfasst.

3. Tonerdichtungsmaterial nach Anspruch 1 oder 2, wobei die Zusammensetzung für Polyurethanschaumstoff durch weiteres Mischen eines bi- oder höherfunktionellen Vernetzungsmittels hergestellt wird.

4. Tonerdichtungsmaterial nach Anspruch 3, wobei eine Menge des gemischten bi- oder höherfunktionellen Vernetzungsmittels 0,1 bis 3,0 Masseteile, auf 100 Masseteile des Polyols bezogen, beträgt.

5. Tonerdichtungsmaterial nach Anspruch 3 oder 4, wobei das bi- oder höherfunktionelle Vernetzungsmittel ein trifunktionelles Vernetzungsmittel ist.

6. Bilderzeugungsvorrichtung umfassend das Tonerdichtungsmaterial nach Anspruch 1.

## Revendications

1. Matériau d'étanchéité d'encre en poudre, qui est formé d'une mousse de polyuréthane produite par moussage d'une composition pour la mousse de polyuréthane,
où la composition pour la mousse de polyuréthane est produite par mélange d'un polyol comprenant un polyester polyol et un polyéther polyol, de diisocyanate de tolylène, d'un agent moussant, et d'un agent de stabilisation de mousse,
où le polyester polyol comprend un polyol ester de phtalate, et le diisocyanate de tolylène présente un rapport en masse de composition (diisocyanate de 2,4-tolylène/diisocyanate de 2,6-tolylène) de (65/35) à (70/30),
où la composition pour la mousse de polyuréthane présente un rapport en masse du polyester polyol au polyéther polyol (polyester polyol/polyéther polyol) de (70/30) à (30/70).

2. Matériau d'étanchéité d'encre en poudre selon la revendication 1, dans lequel l'agent de stabilisation de mousse comprend un agent de stabilisation de mousse de silicone réactif.

3. Matériau d'étanchéité d'encre en poudre selon la revendication 1 ou 2, dans lequel la composition pour la mousse de polyuréthane est produite par mélange supplémentaire d'un agent de réticulation bifonctionnel ou à fonctionnalité supérieure.

4. Matériau d'étanchéité d'encre en poudre selon la revendication 3, dans lequel une quantité de l'agent de réticulation bifonctionnel ou à fonctionnalité supérieure mélangée est de 0,1 à 3,0 parties en masse sur la base de 100 parties en masse du polyol.

5. Matériau d'étanchéité d'encre en poudre selon la revendication 3 ou 4, dans lequel l'agent de réticulation bifonctionnel ou à fonctionnalité supérieure est un agent de réticulation trifonctionnel.

6. Dispositif de formation d'image comprenant le matériau d'étanchéité d'encre en poudre selon la revendication 1.
